# EUROPÄISCHE PATENTSCHRIFT

(11) **EP 3 459 056 B1**
(45) Veröffentlichungstag und Bekanntmachung des Hinweises auf die Patenterteilung: **05.04.2023**
(21) Anmeldenummer: 17725216.0
(22) Anmeldetag: 17.05.2017
(51) Int. Cl.: G07B 15/06, G08G 1/015, G08G 1/017

(54) **EINSATZFAHRZEUG ODER FLUGGERÄT MIT EINER TRÄGERPLATTFORM UND EINEM MAUTKONTROLLGERÄT, MAUTKONTROLLSYSTEM UND VERFAHREN ZUM KONTROLLIEREN EINER MAUTZAHLUNG**
SERVICE VEHICLE OR AIRCRAFT HAVING A CARRIER PLATFORM AND A TOLL CHECKING DEVICE, TOLL CHECKING SYSTEM, AND METHOD FOR CHECKING A TOLL PAYMENT
VÉHICULE D'INTERVENTION OU AÉRONEF DOTÉ D'UNE PLATEFORME DE SUPPORT ET D'UN APPAREIL DE CONTRÔLE DE PÉAGE, SYSTÈME DE CONTRÔLE DE PÉAGE ET PROCÉDÉ POUR CONTRÔLER L'ACQUITTEMENT DE PÉAGE

(30) Priorität: 18.05.2016 DE 102016109148
(43) Veröffentlichungstag der Anmeldung: 27.03.2019
(73) Patentinhaber: Jenoptik Robot GmbH, 40789 Monheim (DE)
(72) Erfinder: LEHNING, Michael, 31137 Hildesheim (DE); SCHIFFER, Lukas, 50968 Köln (DE); DOHMANN, Bernhard, 40764 Langenfeld (DE); LEIJSSEN, Marco, 82194 Gröbenzell (DE); REISS, Maik, 31275 Ahlten (DE); GRAW, Peter, 31848 Bad Münder (DE)
(74) Vertreter: Waldauf, Alexander
(86) Internationale Anmeldenummer: PCT/EP2017/061842
(87) Internationale Veröffentlichungsnummer: WO 2017/198710

(56) Entgegenhaltungen:
- EP-A2- 2 690 601
- US-A1- 2008 238 719
- US-A1- 2013 201 035
- US-A1- 2013 278 715

## Beschreibung

Die vorliegende Erfindung bezieht sich auf ein Einsatzfahrzeug oder Fluggerät mit einer Trägerplattform und einem Mautkontrollgerät, auf ein Mautkontrollsystem und auf ein Verfahren zum Kontrollieren einer Mautzahlung.

Die US 2013/0201035 A1 offenbart ein Einsatzfahrzeug mit einer Trägerplattform und einem Mautkontrollgerät, wobei das Mautkontrollgerät eine Sensoreinrichtung zum Erzeugen einer Fahrzeuginformation aufweist, die ein im Umfeld des Einsatzfahrzeuges befindliches Fahrzeug repräsentiert. Ferner weist das Mautkontrollgerät ein Steuergerät mit einer Schnittstelle zu einer Mautdatenverarbeitungseinrichtung auf, wobei das Steuergerät ausgebildet ist, um über die Schnittstelle die Fahrzeuginformation an die Mautdatenverarbeitungseinrichtung zu senden.

In einen Lichtbalken für ein Einsatzfahrzeug kann eine Kamera zur Überwachung eines Umfelds des Einsatzfahrzeugs integriert sein.

Vor diesem Hintergrund schafft die vorliegende Erfindung ein verbessertes Einsatzfahrzeug oder Fluggerät mit einer Trägerplattform und einem Mautkontrollgerät, ein verbessertes Mautkontrollsystem und ein verbessertes Verfahren zum Kontrollieren einer Mautzahlung gemäß den Hauptansprüchen. Vorteilhafte Ausgestaltungen ergeben sich aus den Unteransprüchen und der nachfolgenden Beschreibung.

Es wird ein Einsatzfahrzeug oder Fluggerät mit einer Trägerplattform und einem Mautkontrollgerät vorgestellt, wobei das Mautkontrollgerät folgende Merkmale aufweist:
eine Sensoreinrichtung zum Erzeugen einer Fahrzeuginformation, die ein im Umfeld der Trägerplattform befindliches Fahrzeug repräsentiert; und
ein Steuergerät mit einer Schnittstelle zu einer Mautdatenverarbeitungseinrichtung, wobei das Steuergerät ausgebildet ist, um über die Schnittstelle die Fahrzeuginformation an die Mautdatenverarbeitungseinrichtung zu senden und eine unter Verwendung der Fahrzeuginformation erzeugte Mautzahlungsinformation, die eine dem Fahrzeug zugeordnete Mautzahlung repräsentiert, von der Mautdatenverarbeitungseinrichtung zu empfangen; und
und wobei das Mautkontrollgerät an der Trägerplattform angeordnet oder anordenbar ist und wobei das Mautkontrollgerät von der Trägerplattform abnehmbar ist.

Unter einem Mautkontrollgerät kann insbesondere ein mobiles Gerät verstanden werden. Unter einer Trägerplattform kann ein beliebiges mobiles Trägergerät zum Verbringen des Mautkontrollgerätes an einen beliebigen Ort verstanden werden. Beispielsweise kann das Mautkontrollgerät an der Trägerplattform, etwa einem Dach, einer Tür, einem Stoßfänger oder einer Scheibe eines Einsatzfahrzeugs oder eines Fluggeräts (wie beispielsweise ein Hubschrauber oder eine Drohne), angeordnet oder anordenbar sein. Alternativ kann das Mautkontrollgerät auch im Innenraum der Trägerplattform angeordnet oder anordenbar sein, etwa an einem Armaturenbrett oder einer Innenseite einer Front-, Heck- oder Seitenscheibe. Unter einem Einsatzfahrzeug kann vorliegend beispielsweise ein Kraftfahrzeug wie etwa ein Personen- oder Lastkraftwagen, ein Kraftrad oder ein Fahrrad verstanden werden. Alternativ oder zusätzlich kann das Mautkontrollgerät wie zuvor angedeutet, an einer Trägerplattform eines autonom fahrenden oder fliegenden Fahr- oder Flugzeug bzw. eine sogenannte Drohne angebracht werden. Handelt es sich bei dem Einsatzfahrzeug um ein Kraft- oder Fahrrad, so kann das Mautkontrollgerät beispielsweise an einer Außenverkleidung, einem Gepäckträger, einer Gepäcktasche, einem Gepäckkoffer oder einer im Kraft- oder Fahrrad verbauten Sondersignalanlage angeordnet oder anordenbar sein. Die Sensoreinrichtung kann einen oder mehrere Einzelsensoren wie beispielsweise Mono- oder Stereokameras, Radar-, Infrarot- oder Lasersensoren umfassen. Je nach Ausführungsform kann die Sensoreinrichtung eine zusätzliche Beleuchtungseinrichtung zum Beleuchten eines Erfassungsbereichs der Sensoreinrichtung, insbesondere etwa mit Infrarotlicht, umfassen. Bei der Mautdatenverarbeitungseinrichtung kann es sich um eine fahrzeugexterne Einrichtung wie etwa einen zentralen Datenbankserver oder eine in das Steuergerät integrierte Einrichtung handeln. Die Mautdatenverarbeitungseinrichtung kann beispielsweise ausgebildet sein, um Daten einer zentralen Mautdatenbank zu verarbeiten. Hierzu können die Daten in der Mautdatenverarbeitungseinrichtung hinterlegt sein oder bei Bedarf durch die Mautdatenverarbeitungseinrichtung abgerufen oder abgespeichert werden. Bei der Schnittstelle des Steuergeräts kann es sich um eine Schnittstelle zur drahtlosen oder drahtgebundenen Kommunikation handeln.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Der hier beschriebene Ansatz beruht auf der Erkenntnis, dass ein Mautkontrollgerät Sensordaten einer an einer Trägerplattform montierten Sensoreinrichtung zur Kontrolle von Mautzahlungen verwenden kann. Hierbei können die Sensordaten über eine geeignete Schnittstelle des Mautkontrollgeräts beispielsweise an eine zentrale Mautdatenbank gesendet und dort abgeglichen werden. Als Ergebnis dieses Datenabgleichs kann das Mautkontrollgerät über die Schnittstelle dann eine entsprechende Mautzahlungsinformation empfangen. Somit kann ein Mautstatus eines bestimmten erfassten Fahrzeugs einfach und schnell ermittelt werden. Ein solches Mautkontrollgerät kann zudem schnell und ohne großen Aufwand nachgerüstet werden, insbesondere beispielsweise, wenn das Mautkontrollgerät in eine Sondersignalanlage, etwa in Form eines Dachbalkens, integriert ist. Dadurch kann das Mautkontrollgerät bei Bedarf schnell und einfach montiert und demontiert werden. Vorteilhafterweise sind hierzu keine umfangreichen Änderungen an der Fahrzeugmechanik der Trägerplattform erforderlich. Vorteilhaft ist ferner eine Ausführungsform des hier vorgestellten Ansatzes, bei dem das Mautkontrollgerät zumindest eine regenerative Energiequelle, insbesondere eine Solarzelle aufweist, um das Mautkontrollgerät mit elektrischer Energie zu versorgen. Auf diese Weise kann vorteilhaft ein autarker Betrieb des Mautkontrollgerätes realisiert sein.

Gemäß einer Ausführungsform kann die Sensoreinrichtung ausgebildet sein, um eine ein dreidimensionales Bild, ein Kennzeichen, eine Geschwindigkeit, eine Fahrzeuggröße, eine Fahrzeugklasse, eine Achsanzahl (inkl. Unterscheidung Achs-Einsatz bzw. Nicht-Einsatz) oder einen Abstand des Fahrzeugs repräsentierende Information als die Fahrzeuginformation zu erzeugen. Bei der Geschwindigkeit kann es sich um eine Relativgeschwindigkeit des Fahrzeugs relativ zur Trägerplattform oder eine Absolutgeschwindigkeit des Fahrzeugs handeln. Unter einer Fahrzeugklasse kann eine einen Fahrzeugtyp charakterisierende Information verstanden werden. Fahrzeugtypen sind beispielsweise Pkw, Lkw, Fahrzeug mit oder ohne Anhänger, zwei- oder mehrachsiges Fahrzeug oder ein- oder zweispuriges Fahrzeug. Bei dem Abstand kann es sich um einen Abstand des Fahrzeugs relativ zur Trägerplattform oder zu einem dem Fahrzeug vorausfahrenden oder folgenden weiteren Fahrzeug handeln. Durch diese Ausführungsform kann eine zuverlässige und differenzierte Erfassung von Fahrzeugen im Umfeld der Trägerplattform gewährleistet werden.

Es ist von Vorteil, wenn die Sensoreinrichtung einen Erfassungswinkel von 360 Grad aufweist. Hierbei kann die Sensoreinrichtung mehrere, in unterschiedliche Richtungen orientierte Sensoren umfassen. Dadurch wird eine möglichst großflächige Erfassung von Fahrzeugen rund um die Trägerplattform ermöglicht.

Des Weiteren kann die Sensoreinrichtung zumindest einen ersten Sensor und einen zweiten Sensor zum Erfassen des Fahrzeugs aufweisen. Dadurch kann der Erfassungsbereich der Sensoreinrichtung vergrößert werden.

Hierbei können der erste Sensor und der zweite Sensor in unterschiedliche Blickrichtungen orientiert sein. Der erste Sensor und der zweite Sensor können beispielsweise in einander entgegengesetzte oder im Wesentlichen senkrecht aufeinander stehende Richtungen orientiert sein. Beispielsweise kann zumindest einer der beiden Sensoren in eine Hauptfahrtrichtung der Trägerplattform, in eine im Wesentlichen senkrecht auf der Hauptfahrtrichtung stehende Richtung oder in eine der Hauptfahrtrichtung entgegengesetzte Richtung orientiert sein. Beispielsweise kann es sich bei den beiden Sensoren um unterschiedliche Sensorarten handeln. Durch diese Ausführungsform wird eine effiziente und präzise Erfassung des Umfelds der Trägerplattform ermöglicht.

Gemäß einer weiteren Ausführungsform können sich ein Erfassungsbereich des ersten Sensors und ein Erfassungsbereich des zweiten Sensors zumindest teilweise überlappen. Dadurch kann die Erfassungsqualität der Sensoreinrichtung verbessert werden.

Die Sensoreinrichtung kann zumindest einen weiteren Sensor zum Erfassen des Fahrzeugs aufweisen. Insbesondere kann der weitere Sensor in eine von einer Blickrichtung des ersten Sensors oder des zweiten Sensors abweichende Blickrichtung orientiert sein. Dadurch kann zum einen der Erfassungsbereich der Sensoreinrichtung weiter vergrößert werden. Zum anderen kann dadurch die Genauigkeit der Sensoreinrichtung verbessert werden.

In einer weiteren Ausführungsform kann das Mautkontrollgerät in eine Sondersignalanlage integriert sein. Insbesondere kann die Sondersignalanlage mit dem integrierten Mautkontrollgerät von der Trägerplattform des Einsatzfahrzeuges oder des Fluggeräts abnehmbar sein. Unter einer Sondersignalanlage kann beispielsweise ein an einem Dach des Einsatzfahrzeuges oder des Fluggeräts montierbarer Licht- oder Dachbalken, ein Blink- oder Blitzlicht, ein Lautsprecher oder eine Kombination aus mehreren, unterschiedlichen Sondersignalgebern verstanden werden. Diese Ausführungsform ermöglicht eine platzsparende Integration des Mautkontrollgeräts in eine Sondersignalanlage.

Der hier vorgestellte Ansatz schafft schließlich ein Verfahren zum Kontrollieren einer Mautzahlung unter Verwendung eines Mautkontrollgeräts gemäß einer der vorstehenden Ausführungsformen, wobei das Verfahren folgende Schritte umfasst:
Senden der Fahrzeuginformation; und
Empfangen der Mautzahlungsinformation.

Gemäß einer Ausführungsform kann das Verfahren einen Schritt des Klassierens des Fahrzeugs unter Verwendung der Fahrzeuginformation umfassen, um eine Klassierungsinformation zu erhalten. Im Schritt des Sendens kann ferner die Klassierungsinformation gesendet werden. Im Schritt des Empfangens kann eine unter Verwendung der Klassierungsinformation erzeugte Information als die Mautzahlungsinformation empfangen werden. Unter Klassieren kann ein Zuordnen des Fahrzeugs zu einer vorgegebenen Fahrzeugklasse verstanden werden. Dadurch kann eine effiziente und robuste Zuordnung des erfassten Fahrzeugs gewährleistet werden.

Gemäß einer weiteren Ausführungsform kann in einem optionalen Schritt die Mautzahlungsinformation als Warnsignal ausgegeben werden. Unter einem Warnsignal kann ein akustisches oder optisches Signal verstanden werden. Beispielsweise kann die Mautzahlungsinformation eine Abweichung zwischen einem Betrag der Mautzahlung und einem Sollbetrag repräsentieren, wobei im Schritt des Ausgebens das Warnsignal in Abhängigkeit von der Abweichung ausgegeben werden kann. Dadurch kann ein Benutzer des Mautkontrollgeräts schnell und unmissverständlich über eine erfolgte oder nicht erfolgte Mautzahlung informiert werden.

Die Erfindung wird anhand der beigefügten Zeichnungen beispielhaft näher erläutert. Es zeigen:
Figur 1 eine schematische Darstellung eines Einsatzfahrzeugs als Trägerplattform mit einem Mautkontrollgerät gemäß einem Ausführungsbeispiel;
Figur 2 eine schematische Darstellung eines Mautkontrollgeräts gemäß einem Ausführungsbeispiel;
Figur 3 eine schematische Darstellung eines Einsatzfahrzeugs als Trägerplattform aus Figur 1 in der Draufsicht;
Figur 4 eine schematische Darstellung eines Steuergeräts eines Mautkontrollgeräts gemäß einem Ausführungsbeispiel;
Figur 5 eine schematische Darstellung eines nicht zur Erfindung gehörigen Mautkontrollsystems gemäß einem Ausführungsbeispiel; und
Figur 6 ein Ablaufdiagramm eines Verfahrens gemäß einem Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

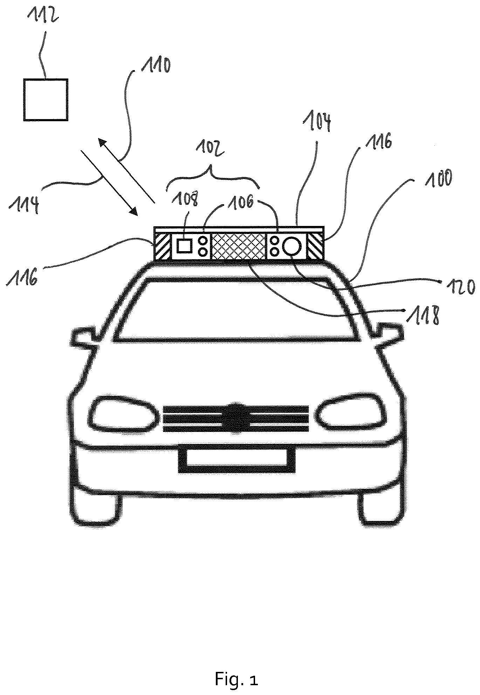

Figur 1 zeigt eine schematische Darstellung eines Einsatzfahrzeugs 100 mit einem Mautkontrollgerät 102 gemäß einem Ausführungsbeispiel. Das Mautkontrollgerät 102 ist gemäß diesem Ausführungsbeispiel in eine an einer Trägerplattform 100 des Einsatzfahrzeugs 100 angebrachte Sondersignalanlage 104 in Form eines Lichtbalkens integriert. In diesem Ausführungsbeispiel ist die Trägerplattform 100 als Fahrzeugdach ausgebildet. Das Mautkontrollgerät 102 umfasst eine Sensoreinrichtung 106 sowie ein Steuergerät 108. Die Sensoreinrichtung 106 ist ausgebildet, um Fahrzeuge im Umfeld des Einsatzfahrzeugs 100 zu erfassen. Das Steuergerät 108 ist ausgebildet, um eine von der Sensoreinrichtung 106 beim Erfassen des Umfelds erzeugte Fahrzeuginformation 110 drahtlos an eine hier außerhalb des Einsatzfahrzeugs 100 befindliche Mautdatenverarbeitungseinrichtung 112 weiterzuleiten. Die Fahrzeuginformation 110 repräsentiert beispielsweise ein zwei- oder dreidimensionales Bild, ein Kennzeichen, eine Achsanzahl, eine Größe oder eine Klasse des jeweils erfassten Fahrzeugs. Die Mautdatenverarbeitungseinrichtung 112 ist ausgebildet, um unter Verwendung der Fahrzeuginformation 110 eine dem jeweils erfassten Fahrzeug zugeordnete Mautzahlungsinformation 114 zu generieren, die beispielsweise anzeigt, ob das betreffende Fahrzeug Maut in ausreichender Höhe bezahlt hat oder nicht. Die Mautdatenverarbeitungseinrichtung 112 sendet die Mautzahlungsinformation 114 zurück an das Steuergerät 108. Alternativ kann die Mautdatenverarbeitungseinrichtung 112 als Komponente des Einsatzfahrzeugs 100 realisiert sein oder als sogenannte On-Board-Unit der zu erfassenden Fahrzeuge des Umfelds.

Bei der Sondersignalanlage 104 handelt es sich beispielsweise um eine mobile Sondersignalanlage mit einer entsprechenden Befestigungseinrichtung zum schnellen und einfachen Befestigen der Sondersignalanlage am Einsatzfahrzeug 100. Beispielsweise kann die Sondersignalanlage mittels eines geeigneten Schnellverschlusses an zumindest einem Dachträger des Einsatzfahrzeugs 100 oder mittels Magnetkraft am Fahrzeugdach befestigbar sein.

Zusätzlich zum Mautkontrollgerät 102 umfasst die Sondersignalanlage 104 beispielhaft zwei Signallampen 116, etwa Blaulichter, einen Blitz 118 und eine Lampe 120, etwa in Form eines Suchscheinwerfers. Die Sensoreinrichtung 106 kann mit einem oder mehreren Einzelsensoren wie Kameras, Radar- oder Lasersensoren realisiert sein.

Je nach Ausführungsbeispiel ist die Sensoreinrichtung 106 mit zumindest einer der folgenden Funktionen ausgestattet: Kennzeichenerkennung, Landererkennung, Tag-Nacht-Funktionalität, Messung in Hauptfahrtrichtung, Messung entgegen der Hauptfahrtrichtung, Messung in seitliche Richtungen, Erfassung einer Fahrspurabdeckung, Erkennungsreichweite von mindestens 100 m, Fahrzeuggrößenerkennung, Klassierung bzw. Klassifizierung in zumindest vier Fahrzeugklassen, Achszahlerkennung, Abstandsermittlung, Geschwindigkeitsermittlung, Anonymisierung, Objektverfolgung, Überladungserkennung. Hierbei ist die Sensoreinrichtung 106 bzw. das die Sensoreinrichtung 106 umfassende Mautkontrollgerät als mobiles Gerät realisiert. Das Mautkontrollgerät kann eine Anwendungsprogrammierschnittstelle aufweisen.

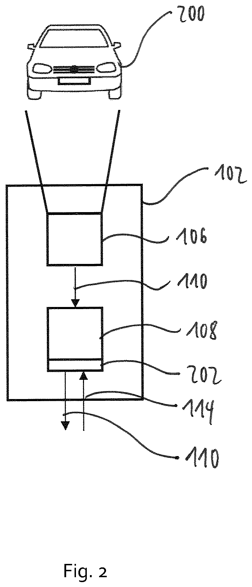

Figur 2 zeigt eine schematische Darstellung eines Mautkontrollgeräts 102 gemäß einem Ausführungsbeispiel, etwa eines Mautkontrollgeräts 102, wie es vorangehend anhand von Figur 1 beschrieben ist. Gezeigt sind die Sensoreinrichtung 106 zum Erfassen eines Fahrzeugs 200 im Umfeld des Einsatzfahrzeugs und Erzeugen der das Fahrzeug 200 repräsentierenden Fahrzeuginformation 110 sowie das Steuergerät 108 zum Senden der Fahrzeuginformation 110 und Empfangen der Mautzahlungsinformation 114. Das Steuergerät 108 ist mit einer Schnittstelle 202 zum Austausch von Daten zwischen dem Mautkontrollgerät 102 und der Mautdatenverarbeitungseinrichtung ausgestattet. Je nach Ausführungsbeispiel handelt es sich bei der Schnittstelle 202 um eine Schnittstelle zur drahtlosen oder drahtgebundenen Kommunikation.

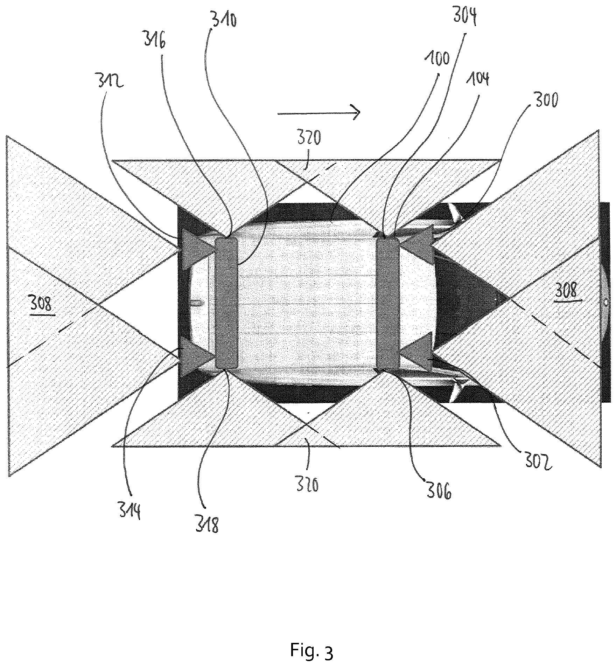

Figur 3 zeigt eine schematische Darstellung eines Einsatzfahrzeugs 100 aus Figur 1 in der Draufsicht. Zu erkennen ist die Sondersignalanlage 104 mit der darin integrierten Sensoreinrichtung. Beispielhaft ist die Sondersignalanlage 104 benachbart zu einer einer Windschutzscheibe des Einsatzfahrzeugs 100 zugewandten Schmalseite des Fahrzeugdachs angeordnet. Alternativ kann die Sondersignalanlage 104 an einer beliebigen anderen Stelle des Einsatzfahrzeugs 100 angeordnet sein. Gemäß diesem Ausführungsbeispiel ist die Sensoreinrichtung mit einem ersten Sensor 300, einem zweiten Sensor 302, einem dritten Sensor 304 und einem vierten Sensor 306 zum Erfassen des Umfelds des Einsatzfahrzeugs 100 realisiert. Die vier Sensoren können jeweils wiederum aus mehreren Sensorelementen realisiert sein. Hierbei sind der erste Sensor 300 und der zweite Sensor 302 in eine Hauptfahrtrichtung des Einsatzfahrzeugs 100 orientiert. Die Hauptfahrtrichtung ist durch einen Pfeil gekennzeichnet. Gemäß einem alternativen Ausführungsbeispiel weisen die beiden Sensoren 300, 302 unterschiedliche Blickrichtungen, etwa einander entgegengesetzte Blickrichtungen, auf. Die Erfassungsbereiche der beiden Sensoren 300, 302 überlappen sich in einem Überlappungsbereich 308. Der dritte Sensor 304 und der vierte Sensor 306 sind je seitlich an der Sondersignalanlage 104 angeordnet und weisen einander entgegengesetzte Blickrichtungen auf. Die beiden Sensoren 304, 306 können deshalb auch als seitliche Sensoren bezeichnet werden. Hierbei ist der dritte Sensor 304 einer ersten Längsseite des Einsatzfahrzeugs 100 zugewandt, während der vierte Sensor 306 einer der ersten Längsseite gegenüberliegenden zweiten Längsseite des Einsatzfahrzeugs 100 zugewandt ist. Die jeweiligen Blickrichtungen der seitlichen Sensoren 304, 306 stehen im Wesentlichen senkrecht auf den jeweiligen Blickrichtungen des ersten Sensors 300 und des zweiten Sensors 302. Die jeweiligen Erfassungsbereiche der in Figur 3 gezeigten Sensoren sind mit schraffierten Dreiecken angedeutet.

Optional ist das Einsatzfahrzeug 100 mit einer weiteren Sondersignalanlage 310 ausgestattet, in die ein weiteres Mautkontrollgerät integriert ist. Die weitere Sondersignalanlage 310 ist beispielsweise an einer der Sondersignalanlage 104 gegenüberliegenden Schmalseite des Fahrzeugdachs angeordnet. Das weitere Mautkontrollgerät ist analog zu dem in die Sondersignalanlage 104 integrierten Mautkontrollgerät aufgebaut und umfasst dementsprechend vier weitere Sensoren 312, 314, 316, 318 zum Erfassen des Umfelds des Einsatzfahrzeugs 100. Hierbei sind die beiden weiteren Sensoren 312, 314 je in eine der Hauptfahrtrichtung und somit den jeweiligen Blickrichtungen des ersten Sensors 300 bzw. des zweiten Sensors 302 entgegengesetzte Blickrichtung orientiert. Die Sensoren 316, 318 sind wie der dritte Sensor 304 bzw. der vierte Sensor 306 als seitliche Sensoren ausgebildet und dementsprechend je einer der beiden Längsseiten des Einsatzfahrzeugs 100 zugewandt. Hierbei überlappen sich die Erfassungsbereiche der seitlichen Sensoren 304, 316 sowie die Erfassungsbereiche der seitlichen Sensoren 306, 318 jeweils in einem weiteren Überlappungsbereich 320. Durch eine derartige Sensoranordnung kann ein Erfassungswinkel von 360 Grad erreicht werden, wobei die beiden Sondersignalanlagen 104, 310 eine Mehrfach-Stereoanordnung von Sensoren für mobile Anwendungen in der Verkehrsüberwachung repräsentieren.

Für einen Einsatz im Polizeidienst ist es beispielsweise erforderlich, eine Fahrzeugklasse und ein Kennzeichen eines zu überwachenden Fahrzeugs zu bestimmen. Die Technik für einen derartigen Einsatz sollte möglichst modular sein und im Polizeifahrzeug nicht fest verbaut untergebracht sein. Aus diesem Grund ist es vorteilhaft, wenn das Mautkontrollgerät in einer Sondersignalanlage in Form eines Dachbalkens, insbesondere eines Lichtbalkens, angeordnet ist, wie dies beispielhaft in den Figuren 1 und 3 gezeigt ist.

Der hier vorgestellte Ansatz ermöglicht gemäß einem Ausführungsbeispiel die Erfassung dreidimensionaler Objekte inkl. geometrischer Vermessung dieser sowie das Lesen von Kennzeichen mithilfe zumindest eines Stereokamerasystems als Sensoreinrichtung. Optional ist die Sensoreinrichtung mit einer Infrarotbeleuchtung ausgestattet, um Einsätze bei Dunkelheit zu ermöglichen.

Beispielsweise sind in die Sondersignalanlage 104 zumindest zwei Kameras als Sensoren sowie zumindest eine Beleuchtungsquelle verbaut, die ausgebildet sind, um den Verkehr vor oder hinter dem Einsatzfahrzeug 100 zu erfassen. Aus dem erfassten Umfeld werden 3D-Informationen, Relativgeschwindigkeiten und weitere fahrzeugrelevante Elemente wie etwa Kennzeichen, Sonderkennzeichen wie beispielsweise Gefahrguttafeln, eine Anzahl von Fahrzeugachsen, Aufbauten oder andere Merkmale als Fahrzeuginformationen extrahiert. Zusätzlich kann die Sondersignalanlage 104 weitere Elemente wie beispielsweise Baken zum Auslesen von Onbord-Uniqueinformationen aufweisen.

Mittels einer einfachen Stereoanordnunq der Sensoren können mehrere Erfassungssysteme so miteinander kombiniert werden, dass durch die Installation zumindest einer entsprechenden Sondersignalanlage eine Rundumerfassung um das Einsatzfahrzeug 100 ermöglicht wird. Beispielsweise können zur Kontrolle von Mautzahlungen im fließenden Straßenverkehr insgesamt vier Stereosysteme wie in Figur 3 gezeigt am Einsatzfahrzeug 100 angeordnet werden.

Ebenso ist es möglich, über ein initiales Messsystem, aus dem Stereosystem selbst oder durch Auslesen einer Fahrzeugelektronik eine Referenzgeschwindigkeit zu extrahieren. Mithilfe der Referenzgeschwindigkeit kann dann eine Absolutgeschwindigkeit des erfassten Fahrzeugs ermittelt werden.

Alternativ kann die Sensoreinrichtung auch als Monosystem realisiert sein. Hierbei wird eine Verkehrsszene durch Erfassen eines optischen Flusses vermessen.

Die Sensoren sind beispielsweise als Time-of-Flight-Kameras, Laserscanner oder Radarsensoren realisiert.

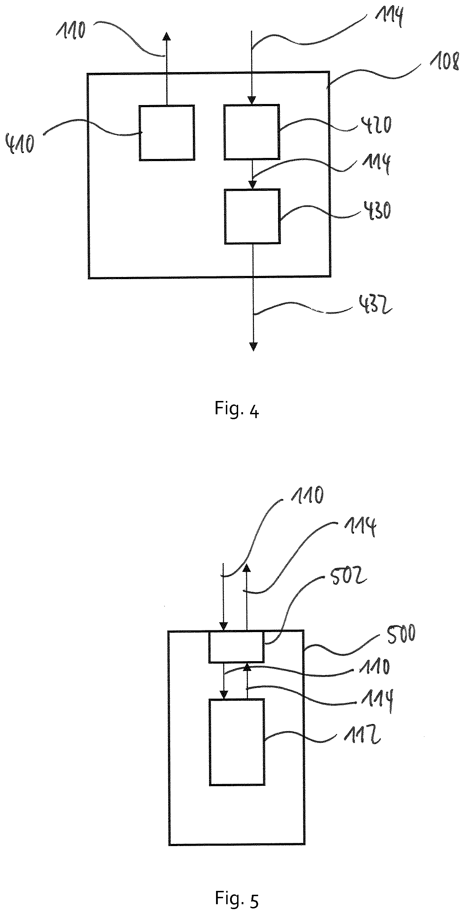

Figur 4 zeigt eine schematische Darstellung eines Steuergeräts 108 eines Mautkontrollgeräts gemäß einem Ausführungsbeispiel. Bei dem Steuergerät 108 handelt es sich beispielsweise um ein vorangehend anhand der Figuren 1 bis 3 beschriebenes Steuergerät. Das Steuergerät 108 umfasst eine Sendeeinheit 410 zum Senden der Fahrzeuginformation 110 sowie eine Empfangseinheit 420 zum Empfangen der Mautzahlungsinformation 114. An die Empfangseinheit 420 ist eine optionale Ausgabeeinheit 430 angeschlossen, die ausgebildet ist, um die Mautzahlungsinformation 114 als ein akustisches oder optisches Warnsignal 432 auszugeben oder in das Warnsignal 432 umzuwandeln.

Figur 5 zeigt eine schematische Darstellung eines nicht zur Erfindung gehörigen Mautkontrollsystems 500 gemäß einem Ausführungsbeispiel. Das Mautkontrollsystem 500 weist die Mautdatenverarbeitungseinrichtung 112, etwa eine vorangehend anhand der Figuren 1 bis 4 beschriebene Mautdatenverarbeitungseinrichtung, sowie eine Systemschnittstelle 502 zur Kommunikation mit dem Mautkontrollgerät auf. Die Mautdatenverarbeitungseinrichtung 112 ist ausgebildet, um über die Systemschnittstelle 502 die Fahrzeuginformation 110 von dem Mautkontrollgerät zu empfangen sowie die Mautzahlungsinformation 114 an das Mautkontrollgerät zu senden. Bei dem Mautkontrollsystem 500 handelt es sich beispielsweise um einen zentralen Datenserver zum Verwalten einer Mautdatenbank. Die Mautdatenverarbeitungseinrichtung 112 ist beispielsweise ausgebildet, um das erfasste Fahrzeug mithilfe der Fahrzeuginformation 110 mit der Mautdatenbank abzugleichen.

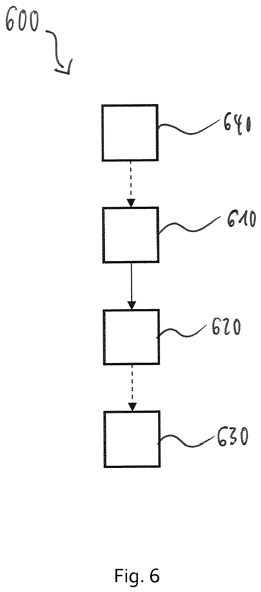

Figur 6 zeigt ein Ablaufdiagramm eines Verfahrens 600 gemäß einem Ausführungsbeispiel. Das Verfahren 600 kann beispielsweise im Zusammenhang mit einem vorangehend anhand der Figuren 1 bis 5 beschriebenen Steuergerät durchgeführt werden. Hierbei wird in einem Schritt 610 die Fahrzeuginformation gesendet. In einem weiteren Schritt 620 wird die Mautzahlungsinformation empfangen.

Gemäß einem optionalen Ausführungsbeispiel umfasst das Verfahren 600 einen Schritt 630, in dem die Mautzahlungsinformation als Warnsignal ausgegeben wird bzw. weitere Schritte der Ahndung und z.B. Abbuchungen zusätzlicher Gebühren und Fehlbeträge beim entsprechenden Fahrzeughalter automatisch eingeleitet werden.

Gemäß einem weiteren Ausführungsbeispiel wird in einem optionalen Schritt 640 vorangehend auf das Senden der Fahrzeuginformation das durch die Fahrzeuginformation repräsentierte Fahrzeug klassiert, um eine eine Fahrzeugklasse des Fahrzeugs repräsentierende Klassierungsinformation zu erhalten. Im Schritt 610 wird ferner die Klassierungsinformation an die Mautdatenverarbeitungseinrichtung gesendet, die die Mautzahlungsinformationen unter Verwendung der Klassierungsinformation erzeugt.

Je nach Ausführungsbeispiel können Mautvorfälle in einem optionalen Schritt dokumentiert werden. In einem weiteren optionalen Schritt kann die Mautzahlungsinformation über die Schnittstelle des Steuergeräts an weitere Einsatzfahrzeuge weitergeleitet werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist. Bei der Verwendung der Einzahl von Merkmalen wird diese besondere Ausführungsform hervorgehoben, eine Mehrzahl jedoch nicht ausgeschlossen.

## Patentansprüche

1. Einsatzfahrzeug oder Fluggerät (100) mit einer Trägerplattform (100) und einem Mautkontrollgerät (102), wobei das Mautkontrollgerät (102) folgende Merkmale aufweist:
eine Sensoreinrichtung (106) zum Erzeugen einer Fahrzeuginformation (110), die ein im Umfeld des Einsatzfahrzeuges oder Fluggeräts befindliches Fahrzeug (200) repräsentiert; und
ein Steuergerät (108) mit einer Schnittstelle (202) zu einer Mautdatenverarbeitungseinrichtung (112), wobei das Steuergerät (108) ausgebildet ist, um über die Schnittstelle (202) die Fahrzeuginformation (110) an die Mautdatenverarbeitungseinrichtung (112) zu senden und eine unter Verwendung der Fahrzeuginformation (110) erzeugte Mautzahlungsinformation (114), die eine dem Fahrzeug (200) zugeordnete Mautzahlung repräsentiert, von der Mautdatenverarbeitungseinrichtung (112) zu empfangen; und wobei das Mautkontrollgerät (102) an der Trägerplattform (100) angeordnet oder anordenbar ist und wobei das Mautkontrollgerät (102) von der Trägerplattform (100) abnehmbar ist.

2. Einsatzfahrzeug oder Fluggerät gemäß Anspruch 1, **dadurch gekennzeichnet, dass** die Sensoreinrichtung (106) ausgebildet ist, um eine ein dreidimensionales Bild und/oder ein Kennzeichen und/oder eine Geschwindigkeit und/oder eine Fahrzeuggröße und/oder eine Fahrzeugklasse und/oder eine Achsanzahl und/oder einen Abstand des Fahrzeugs (200) repräsentierende Information als die Fahrzeuginformation (110) zu erzeugen.

3. Einsatzfahrzeug oder Fluggerät gemäß einem der vorangegangenen Ansprüche, **dadurch gekennzeichnet, dass** die Sensoreinrichtung (106) einen Erfassungswinkel von 360 Grad aufweist.

4. Einsatzfahrzeug oder Fluggerät gemäß einem der vorangegangenen Ansprüche, **dadurch gekennzeichnet, dass** die Sensoreinrichtung (106) zumindest einen ersten Sensor (300) und einen zweiten Sensor (302) zum Erfassen des Fahrzeugs (200) aufweist und/oder wobei das Mautkontrollgerät (102) ferner zumindest eine regenerative Energiequelle aufweist.

5. Einsatzfahrzeug oder Fluggerät gemäß Anspruch 4, **dadurch gekennzeichnet, dass** der erste Sensor (300) und der zweite Sensor (302) in unterschiedliche Blickrichtungen orientiert sind.

6. Einsatzfahrzeug oder Fluggerät gemäß Anspruch 4 oder 5, **dadurch gekennzeichnet, dass** sich ein Erfassungsbereich des ersten Sensors (300) und ein Erfassungsbereich des zweiten Sensors (302) zumindest teilweise überlappen.

7. Einsatzfahrzeug oder Fluggerät gemäß einem der Ansprüche 4 bis 6, **dadurch gekennzeichnet, dass** die Sensoreinrichtung (106) zumindest einen weiteren Sensor (312, 314, 316, 318) zum Erfassen des Fahrzeugs (200) aufweist, insbesondere wobei der weitere Sensor (312, 314, 316, 318) in eine von einer Blickrichtung des ersten Sensors (300) und/oder des zweiten Sensors (302) abweichende Blickrichtung orientiert ist.

8. Einsatzfahrzeug oder Fluggerät gemäß einem der vorhergehenden Ansprüche, **dadurch gekennzeichnet, dass** eine Sondersignalanlage (104) mit einem Mautkontrollgerät (102) von der Trägerplattform (100) abnehmbar ist.

9. Verfahren (600) zum Kontrollieren einer Mautzahlung unter Verwendung eines Mautkontrollgeräts (102) gemäß einem der Ansprüche 1 bis 8, wobei das Verfahren (600) folgende Schritte umfasst:
Senden (610) der Fahrzeuginformation (110); und
Empfangen (620) der Mautzahlungsinformation (114).

10. Verfahren (600) gemäß Anspruch 9, **gekennzeichnet durch** einen Schritt des Klassierens (640) oder Klassifizierens des Fahrzeugs (200) unter Verwendung der Fahrzeuginformation (110), um eine Klassierungsinformation zu erhalten, wobei im Schritt des Sendens (610) ferner die Klassierungsinformation gesendet wird, wobei im Schritt des Empfangens (620) eine unter Verwendung der Klassierungsinformation erzeugte Information als die Mautzahlungsinformation (114) empfangen wird.

11. Verfahren (600) gemäß Anspruch 9 oder 10, **gekennzeichnet durch** einen Schritt des Ausgebens (630) der Mautzahlungsinformation (114) als Warnsignal (432).

## Claims

1. Emergency vehicle or aircraft (100) comprising a carrier platform (100) and a toll control apparatus (102), wherein the toll control apparatus (102) comprises the following features:
a sensor device (106) for generating an item of vehicle information (110) which represents a vehicle (200) located in the surroundings of the emergency vehicle or aircraft; and
a control apparatus (108) having an interface (202) to a toll data processing means (112), the control apparatus (108) being designed to send, via the interface (202), the item of vehicle information (110) to the toll data processing means (112) and to receive, from the toll data processing means (112), an item of toll payment information (114) which represents a toll payment associated with the vehicle (200) and is generated using the item of vehicle information (110); and wherein the toll control apparatus (102) is arranged or can be arranged on the carrier platform (100), and wherein the toll control apparatus (102) can be removed from the carrier platform (100).

2. Emergency vehicle or aircraft according to claim 1, **characterized in that** the sensor device (106) is designed to generate an item of information representing a three-dimensional image and/or a sign and/or a speed and/or a vehicle size and/or a vehicle class and/or an axle number and/or a distance from the vehicle (200) as the item of vehicle information (110).

3. Emergency vehicle or aircraft according to either of the preceding claims, **characterized in that** the sensor device (106) has a detection angle of 360 degrees.

4. Emergency vehicle or aircraft according to any of the preceding claims, **characterized in that** the sensor device (106) has at least one first sensor (300) and one second sensor (302) for detecting the vehicle (200), and/or the toll control apparatus (102) further comprising at least one regenerative energy source.

5. Emergency vehicle or aircraft according to claim 4, **characterized in that** the first sensor (300) and the second sensor (302) are oriented in different viewing directions.

6. Emergency vehicle or aircraft according to either claim 4 or claim 5, **characterized in that** a detection region of the first sensor (300) and a detection region of the second sensor (302) overlap at least in part.

7. Emergency vehicle or aircraft according to any of claims 4 to 6, **characterized in that** the sensor device (106) has at least one further sensor (312, 314, 316, 318) for detecting the vehicle (200), in particular the further sensor (312, 314, 316, 318) being oriented in a viewing direction deviating from a viewing direction of the first sensor (300) and/or of the second sensor (302).

8. Emergency vehicle or aircraft according to any of the preceding claims, **characterized in that** a special signal system (104) is removable from the carrier platform (100) by means of a toll control apparatus (102).

9. Method (600) for controlling a toll payment using a toll control apparatus (102) according to any of claims 1 to 8, wherein the method (600) comprises the steps of:
sending (610) the item of vehicle information (110); and
receiving (620) the item of toll payment information (114).

10. Method (600) according to claim 9, **characterized by** a step of classifying (640) the vehicle (200) using the item of vehicle information (110) to obtain an item of classification information, the item of classification information being further sent in the sending step (610), and in the receiving step (620) an item of information generated using the item of classification information being received as the item of toll payment information (114).

11. Method (600) according to either claim 9 or claim 10, **characterized by** a step of outputting (630) the item of toll payment information (114) as a warning signal (432).

## Revendications

1. Véhicule d'intervention ou aéronef (100) comportant une plate-forme de support (100) et un appareil de contrôle de péage (102), l'appareil de contrôle de péage (102) présentant les caractéristiques suivantes :
un dispositif de capteur (106) permettant de générer des informations de véhicule (110) représentant un véhicule (200) se trouvant à proximité du véhicule d'intervention ou de l'aéronef ; et
un appareil de commande (108) comportant une interface (202) vers un dispositif de traitement de données de péage (112), l'appareil de commande (108) étant configuré pour envoyer les informations de véhicule (110) au dispositif de traitement de données de péage (112) par l'intermédiaire de l'interface (202) et pour recevoir, en provenance du dispositif de traitement de données de péage (112), des informations de paiement de péage (114) générées à l'aide des informations de véhicule (110) et représentant un paiement de péage associé au véhicule (200) ; et l'appareil de contrôle de péage (102) étant disposé ou pouvant être disposé sur la plate-forme de support (100) et l'appareil de contrôle de péage (102) pouvant être détaché de la plate-forme de support (100).

2. Véhicule d'intervention ou aéronef selon la revendication 1, **caractérisé en ce que** le dispositif de capteur (106) est configuré pour générer des informations représentant une image tridimensionnelle et/ou une plaque d'immatriculation et/ou une vitesse et/ou une taille de véhicule et/ou une catégorie de véhicule et/ou un nombre d'essieux et/ou une distance du véhicule (200) en tant qu'informations de véhicule (110).

3. Véhicule d'intervention ou aéronef selon l'une des revendications précédentes, **caractérisé en ce que** le dispositif de capteur (106) présente un angle de détection de 360 degrés.

4. Véhicule d'intervention ou aéronef selon l'une des revendications précédentes, **caractérisé en ce que** le dispositif de capteur (106) présente au moins un premier capteur (300) et un deuxième capteur (302) pour la détection du véhicule (200) et/ou l'appareil de contrôle de péage (102) présentant en outre au moins une source d'énergie renouvelable.

5. Véhicule d'intervention ou aéronef selon la revendication 4, **caractérisé en ce que** le premier capteur (300) et le deuxième capteur (302) sont orientés dans des directions d'observation différentes.

6. Véhicule d'intervention ou aéronef selon la revendication 4 ou 5, **caractérisé en ce qu'**une zone de détection du premier capteur (300) et une zone de détection du deuxième capteur (302) se chevauchent au moins partiellement.

7. Véhicule d'intervention ou aéronef selon l'une des revendications 4 à 6, **caractérisé en ce que** le dispositif de capteur (106) présente au moins un autre capteur (312, 314, 316, 318) pour la détection du véhicule (200), en particulier l'autre capteur (312, 314, 316, 318) étant orienté dans une direction d'observation différente d'une direction d'observation du premier capteur (300) et/ou du deuxième capteur (302).

8. Véhicule d'intervention ou aéronef selon l'une des revendications précédentes, **caractérisé en ce qu'**une installation à signalisation spéciale (104) comportant un appareil de contrôle de péage (102) peut être détachée de la plate-forme de support (100).

9. Procédé (600) permettant le contrôle d'un paiement de péage à l'aide d'un appareil de contrôle de péage (102) selon l'une des revendications 1 à 8, le procédé (600) comprenant les étapes suivantes :
envoi (610) des informations de véhicule (110) ; et
réception (620) des informations de paiement de péage (114).

10. Procédé (600) selon la revendication 9, **caractérisé par** une étape de classement (640) ou de classification du véhicule (200) à l'aide des informations de véhicule (110) afin d'obtenir des informations de classement, à l'étape d'envoi (610), les informations de classement étant en outre envoyées, à l'étape de réception (620), des informations générées à l'aide des informations de classement étant reçues en tant qu'informations de paiement de péage (114).

11. Procédé (600) selon la revendication 9 ou 10, **caractérisé par** une étape de sortie (630) des informations de paiement de péage (114) en tant que signal d'avertissement (432).
